# EUROPÄISCHE PATENTANMELDUNG

(11) **EP 2 492 400 A1**
(43) Veröffentlichungstag der Anmeldung: **29.08.2012**
(21) Anmeldenummer: 11155375.6
(22) Anmeldetag: 22.02.2011
(51) Int. Cl.: E02B 11/00, E03F 1/00, E01C 9/00

(54) **Einbaukörper**

(71) Anmelder: Hewitech GmbH & Co. KG, 48607 Ochtrup (DE)
(72) Erfinder: Hewing, Bernd, 48607 Ochtrup (DE); Dirkskötter, Frank, 48607 Ochtrup (DE)
(74) Vertreter: von Kreisler Selting Werner

(57) **Zusammenfassung**

Der Einbaukörper ist versehen mit mindestens einem ersten Gitterkörper (10), der eine Bodenwand (12) mit einem von dieser aufragenden, Randsteg (14) und mit ebenfalls von der Bodenwand (12) aufragenden, sich kreuzenden Gitterstreben (16,18), die sich jeweils zwischen gegenüberliegenden Abschnitten des Randsteges (14) erstrecken sowie mit diesem verbunden sind und benachbarte, einseitig offene Kammer (20) bilden, weiche durch Aussparungen (26) in den Gitterstreben (16,18) untereinander verbunden sind, wobei in der Bodenwand (12) für jede Kammer (20) mindestens eine Öffnung (24) ausgebildet ist. Ferner weist der Einbaukörper mindestens einen zweiten Gitterkörper (30), der einen hochstehenden, Randsteg (36) mit innerhalb des von diesem begrenzten Bereichs angeordneten, sich kreuzenden Gitterstreben (32,34) aufweist, welche benachbarte, beidseitig offene Kammern (38) bilden, die durch Aussparungen (40) in den Gitterstreben (32,34) untereinander verbunden sind. Von dem Randsteg (36) und/oder den Gitterstreben (32,34) des zweiten Gitterkörpers (30) stehen zu einer Seite desselben Positianiervorsprünge (44) ab, die bei Anordnung eines zweiten Gitterkörpers (30) auf einem ersten Gitterkörper (10) und/oder bei Anordnung zweier zweiter Gitterkörper (30) aufeinander in die Kammern (20) des ersten Gitterkörpers (10) bzw, in die Kammern (38) des anderen zweiten Gitterkörpers (30) eintauchen,

## Beschreibung

Die Erfindung betrifft einen Einbaukörper für eine Vorrichtung zur Behandlung, Kühlung oder Speicherung eines Fluids, wie beispielsweise eines Gases oder einer Flüssigkeit. Beispielsweise kann der Einbaukörper im Erdreich als Drainage- bzw. Entwässerungsvorrichtung eingesetzt werden. Eine weitere Anwendungsmöglichkeit des Einbaukörpers im Erdreich betrifft die Stabilisierung oberflächennaher Bodenzonen, ggf. mit der Möglichkeit der Behandlung von versehentlich oder erwartungsgemäß in den Boden gelangten Schadstoffen. Bei einer derartigen Anwendung ist beispielsweise der Einbaukörpers bepflanzbar, d.h. mit Erdreich bzw. speziellen Mischungen anorganischer und organischer Gemische zur Retention und Reinigung des eintretenden Fluids ausfüllbar und dient u.a. auch der Aufnahme von Lasten auf Verkehrsflächen. Schließlich kann der Einbaukörper gemäß der Erfindung auch als Riesel-, Tauch- oder Tropfkörper in Rieselkühlern, biologischen Reaktoren oder dgl., wie beispielsweise Gaswäschern, als Einbauten in Kühltürmen bzw. Sedimentationshilfen in Absetzbecken eingesetzt werden.

Einbaukörper für die zuvor genannten Verwendungszwecke sind grundsätzlich bekannt. Als Beispiel sei auf EP-A-1 607 534, EP-A-2 116 648 und EP-A-2 208 823 verwiesen. Aus EP-A-1 607 534 ist es bekannt, in der Breite und Höhe unterschiedlich große Literboxen durch Zusammensetzen von Gitterbox-Einzelteilen herzustellen. Demgegenüber offenbaren die beiden anderen Schriften Gitterkörper, die ausschließlich nebeneinander angeordnet werden, um an die Gegebenheiten des Einbauorts angepasst zu werden.

Aus DE-U-20 2006 008 981 ist ein Sicker- und Drainagekörper aus einzelnen scheiben- bzw. plattenförmigen Systemelementen bekannt. Ein ähnliches Konzept ist beispielsweise auch in DE-A-10 2009 052 724 beschrieben. Bei den beiden zuletzt genannten Schriften werden mehrere scheiben- bzw. plattenförmige Systemelemente übereinander gestapelt, wobei mehrere derartige Stapel nebeneinander angeordnet werden können.

Aufgabe der Erfindung ist es, einen Einbaukörper, insbesondere für die zuvor genannten Anwendungszwecke, zu schaffen, der eine erhöhte Stabilität durch Lastverteilung möglichst innerhalb des Gittersystems und verbesserte Variabilität bezüglich der Größe der Gesamtanordnung gewährleistet.

Zur Lösung dieser Aufgabe wird mit der Erfindung ein Einbaukörper vorgeschlagen, der versehen ist mit
- mindestens einem ersten Gitterkörper, der eine Bodenwand mit einem von dieser aufragenden, zumindest teilweise umlaufenden Randsteg und mit ebenfalls von der Bodenwand aufragenden, sich kreuzenden Gitterstreben, die sich jeweils zwischen gegenüberliegenden Abschnitten des Randsteges erstrecken sowie mit diesem verbunden sind und benachbarte, einseitig offene Kammer bilden, welche durch Aussparungen in den Gitterstreben untereinander verbunden sind, wobei in der Bodenwand für jede Kammer mindestens eine Öffnung ausgebildet ist, und
- mindestens einem zweiten Gitterkörper, der einen hochstehenden, umlaufenden Randsteg mit innerhalb des von diesem begrenzten Bereichs angeordneten, sich kreuzenden Gitterstreben aufweist, welche benachbarte, beidseitig offene Kammern bilden, die durch Aussparungen in den Gitterstreben untereinander verbunden sind,
- wobei von dem Randsteg und/oder den Gitterstreben des zweiten Gitterkörpers zu einer Seite desselben Positioniervorsprünge abstehen, die bei Anordnung eines zweiten Gitterkörpers auf einem ersten Gitterkörper und/oder bei Anordnung zweier zweiter Gitterkörper aufeinander in die Kammern des ersten Gitterkörpers bzw. des anderen zweiten Gitterkörpers eintauchen,

Der erfindungsgemäße Einbaukörper wird modular aus zwei unterschiedlichen Gitterlcörpertypen, nämlich mindestens einem ersten Gitterkörper und mindestens einem zweiten Gitterkörper, zusammengesetzt. Diese Gitterkörper werden in einzelnen Lagen nebeneinander und übereinander angeordnet, wobei dann die unterste Lage aus den ersten Gitterkörpern zusammengesetzt ist, während jede über der untersten Lage angeordnete weitere Lage aus mehreren zweiten Gitterkörpern besteht. Dabei besteht die Besonderheit darin, dass die Gitterkörper benachbarter Lagen in Höhenerstreckung des Einbaukörpers nicht miteinander fluchten, sondern versetzt zueinander angeordnet sind, so dass ein Einbaukörperverbund aus im Verbund aufgebauten und zusammengesetzten ersten und zweiten Gitterkörper entsteht bzw. entstehen kann. Zur Positionierung und schubfesten und damit stabilen Anordnung benachbarter Lagen aus ersten bzw. zweiten oder auch aus jeweils zweiten Gitterkörpern weisen die zweiten Gitterkörper zu einer ihrer Seiten überstehende Positioniervorsprünge auf, die mit den Gitterkörpern der jeweils benachbarten Lage des Einbaukörpers mechanisch zusammenwirken. Beide Gitterkörpertypen weisen dabei einen umlaufenden Randsteg auf, wobei innerhalb des von dem jeweiligen Randsteg definierten Bereichs sich kreuzende Gitterstreben angeordnet sind, die mit dem betreffenden Randsteg verbunden sind. Vorzugsweise bilden die sich kreuzenden Gitterstreben eine regelmäßige Struktur. Die sich kreuzenden Gitterstreben beider Gitterkörpertypen definieren benachbarte Kammern, wobei im Falle des ersten Gitterkörpers diese Kammern einseitig geschlossen sind, da der erste Gitterkörper eine Bodenwand aufweist, von der der umlaufenden Randsteg sowie die sich kreuzenden Gitterstreben aufragen. In den den einzelnen Kammern zugeordneten Bereichen der Bodenwand weist diese mindestens eine Öffnung auf. Ferner sind die sich kreuzenden Gitterstreben mit Aussparungen bzw. Durchbrechungen versehen, so dass benachbarte Kammern in Fluidverbindung miteinander stehen, also untereinander verbunden sind. Im Falle des zweiten Gitterkörpers entfällt die Bodenwand, so dass die durch die Gitterstreben gebildeten benachbarten Kammern beidseitig offen sind. Auch hier gilt, dass die Gitterstreben zur Verbindung benachbarter Kammern mit Aussparungen bzw. Durchbrechungen versehen sind.

Die sich kreuzenden Gitterstreben des zweiten Gitterkörpers sind mit den abstehenden Positioniervorsprüngen versehen, die bei Anordnung zweier zweiter Gitterkörper übereinander bzw, bei Anordnung eines zweiten Gitterkörpers auf einem ersten Gitterkörper in die Kammern des einen der beiden zweiten Gitterkörper bzw. in die Kammern des ersten Gitterkörpers eintauchen, wobei sie vorzugsweise an den diese Kammern definierenden Gitterstreben seitlich anliegen. Damit ist eine schubsteife, stabile, dreidimensionale Einbaukörperstruktur geschaffen, deren Festigkeit und Stabilität durch die versetzte und/oder verdrehte Anordnung der Gitterkörper benachbarter Lagen des Einbaukörpers gegeben ist. Dieser Einbaukörperaufbau im Verbund ist insbesondere in der Applikation des Einbaukörpers als mit einem anorganisch/organischen Gemisch (bepflanzbarer) Gitterkörper zum Aufnehmen von Verkehrslasten von Vorteil. Aber auch bei anderen Anwendungsfällen kann es von Vorteil sein, wenn der Einbaukörper kompakt und stabil ist. Auf den Einbaukörper wirkende Lasten (wie z.B. durch Fahrzeuge, wenn der Einbaukörper im Erdreich zur Verhinderung einer Verdichtung der oberflächennahen Bodenzone bei Verkehrsflächen) werden über die aneinander liegenden Gitterstreben der übereinander angeordneten Gitterkörper bis in die aus den ersten Gitterkörpern bestehende unterste Lage weitergeleitet, wo sie über die Bodenwand flächig in das Erdreich verteilt werden.

Wie bereits oben erwähnt, ist es zweckmäßig (aber nicht zwingend erforderlich), wenn bzw. dass die Gitterstrukturen beider Gitterkörpertypen identisch und gleichmäßig sind. Dann lassen sich die einzelnen Gitterkörper um das "Rastermaß" versetzt bzw. verdreht angeordnet zu in der Höhe variablen Einbaukörpern zusammensetzen (Verbundanordnung).

Gemäß einer vorteilhaften Weiterbildung der Erfindung zeichnet sich der Einbaukörper also aus durch
- eine unterste Lage aus nebeneinander liegenden ersten Gitterkörpern und
- mindestens eine zweite Lage aus nebeneinander angeordneten zweiten Gitterkörpern, die auf den ersten Gitterkörpern bzw, auf den zweiten Gitterkörpern einer unteren Lage angeordnet sind,
- wobei die ersten und zweiten Gitterkörper im Verbund angeordnet sind und ein zweiter Gitterkörper sich über mehrere erste Gitterkörper erstreckt oder versetzt gegenüber zwei nebeneinander liegenden ersten Gitterkörpern angeordnet ist und sich zumindest teilweise über diese hinweg erstreckt bzw. ein zweiter Gitterkörper einer oberen zweiten Lage sich über mehrere zweite Gitterkörper einer unteren zweiten Lage erstreckt oder gegenüber zwei nebeneinander liegenden zweiten Gitterkörpern einer unteren zweiten Lage versetzt angeordnet ist und sich zumindest teilweise über diese hinweg erstreckt.

Um den erfindungsgemäßen Einbaukörper seitlich abgrenzen bzw. seitlich "abschließen" zu können, ist es zweckmäßig, mindestens ein L-förmiges Seitenwandelement zu verwenden, das an der von Randstegen der ersten und zweiten Gitterkörper unterschiedlicher Lagen gebildeten Seitenfläche des Einbaukörpers anliegt oder dort mit zumindest einigen der Randstege und einigen der Gitterkörper verbunden ist. Das L-förmige Seitenwandelement weist einen großflächigen und einen kleinerflächigen Schenkel auf, die im Wesentlichen rechtwinklig aufeinander stehen. Das Seitenwandelement kann perforiert oder mit dgl. Durchbrechungen versehen sein, um eine horizontale Wasserverteilung zu unterstützen.

Wie bereits oben erwähnt, sind benachbarte Kammern der jeweiligen Gitterkörper mittels Durchbrechungen bzw. Aussparungen untereinander verbunden. Derartige Aussparungen bzw. Durchbrechungen sind zweckmäßigerweise auch in den Randstegen der beiden Gitterkörpertypen ausgebildet. All diese Durchbrechungen bzw. Aussparungen dienen der Horizontaldurchlässigkeit der Gitterkörper für das zu behandelnde Medium (wie beispielsweise Oberflächen- bzw. Regenwasser- horizontale Wasserverteilung). Die vertikale Wasserverteilung erfolgt über die Kammern der übereinander angeordneten Gitterkörper, die zweckmäßigerweise miteinander fluchten oder aber auch versetzt zueinander angeordnet sein können, wobei sie sich in jedem Fall überlappen und damit ein vertikaler Durchtritt von beispielsweise Oberflächenwasser bzw. Regen durch den Einbaukörper möglich ist, Wenn das Wasser auf diese Weise bis zur untersten Lage des Einbaukörpers gelangt ist, kann es aus den Kammern der untersten Lage, die aus den ersten Gitterkörpern besteht, durch die in der Bodenwand angeordneten Öffnungen ins Erdreich entweichen.

Die Randstegaussparungen können aber auch dazu verwendet werden, um nebeneinander liegende Gitterkörper einer Lage miteinander mechanisch zu verbinden. Zu diesem Zweck können in miteinander fluchtende Randstegaussparungen Verbindungselemente eingesteckt werden, die beispielsweise nach dem Prinzip des Hintergreifens der Kanten der Randstegaussparungen die beiden betreffenden Gitterkörper aneinander fixieren,

Der erfindungsgemäß vorgeschlagene Einbaukörper weist aufgrund der Möglichkeit seines Aufbaus im Verbund eine äußerst hohe Stabilität und eine Vergleichmäßigung der Lastverteilung direkt im Einbaukörper auf. Durch die versetzte Anordnung übereinander angeordneter Gitterkörper dergestalt, dass ein Gitterkörper zwei oder mehr unter ihm liegende überspannt, wird bereits im Einbaukörper selbst die Last verteilt, Bei dieser Last kann es sich beispielsweise um Radlasten von den im Erdreich angeordneten Einbaukörper überfahrenden Fahrzeugen handeln.

In dem zuvor genannten Anwendungsbeispiel, d. h. bei Einbau im Erdreich, ist der Einbaukörper, wie oben bereits erwähnt, mit einer Mischung aus anorganischen und organischen Bestandteilen zur Retention und Reinigung von eintretenden Flüssigkeiten bzw. Schadstoffen gefüllt. Der erfindungsgemäße Einbaukörper erlaubt seine Neuverfüllung (nach Austausch des zuvor eingefüllten Gemisches), ohne dass der Einbaukörper ausgebaut werden muss. Ein weiterer Vorteil bei der zuvor beschriebenen Applikation des Einbaukörpers ist, dass auch ein teilweiser Ersatz von Gitterkörpern des Einbaukörpers möglich ist, ohne den gesamten Einbaukörper zu demontieren. So kann beispielsweise die oberste Lage an Gitterkörpern ausgetauscht werden, während die unteren Lagen unangetastet bleiben.

Hinsichtlich des Aufbaus geometrisch regelmäßiger Einbaukörper von Vorteil ist, wenn die einzelnen Gitterkörper im Wesentlichen die gleichen Abmessungen aufweisen. Die Erfindung ist aber auf dieses Ausführungsbeispiel nicht beschränkt. Ganz grundsätzlich können die einzelnen Gitterkörper (sowohl desselben Typs als auch unterschiedlicher Typen) unterschiedliche Abmessungen aufweisen. So können die Gitterkörper eines Typs insofern verschiedene Abmessungen aufweisen, als, wie bei einem Baukastensystem, Gitterkörper in einer ersten Abmessung (Hauptabmessung) und verschiedene andere Gitterkörper mit Abmessungen umfassen, die beispielsweise halb so groß oder ein Drittel so groß oder ein Viertel so groß sind oder einen anderen Größenanteil der Gitterkörper mit den Hauptabmessungen aufweisen.

Die Erfindung wird nachfolgend anhand mehrerer Ausführungsbeispiele sowie der Zeichnung näher erläutert. Im Einzelnen zeigen dabei:
- Fign. 1-4: verschiedene Ansichten eines ersten Gitterkörpers (Gitterkörper vom ersten Typ),
- Fig. 5-8: verschiedene Ansichten des zweiten Gitterkörpers (Gitterkörper vom zweiten Typ),
- Fign. 9 und 10: perspektivische sowie Seitenansichten der beiden übereinander liegenden ersten und zweiten Gitterkörper gemäß den Fign. 1-8,

- Fign. 11-17: perspektivische Ansichten bzw. Seitenansichten von diversen Einbaukörpern mit unterschiedlicher Gestalt, die man durch verschiedentliches Zusammensetzen der ersten und zweiten Gitterkörper aufbauen kann,
- Fig. 18: einen Einbaukörper, bestehend aus einem ersten Gitterkörper als unterstes Element und zwei übereinander liegenden zweiten Gitterkörpern als über dem untersten Element angeordneten weiteren Elementen sowie einer Seitenwand zum Abschluss des Einbaukörpers zu einer Seite hin,
- Fign. 19-21: diverse Ansichten der Seitenwand, wie sie in Fig. 18 zu erkennen ist, und
- Fig. 22: eine perspektivische Ansicht eines Verbindungselements zur Verbindung nebeneinander liegender erster bzw. zweiter Gitterkörper.

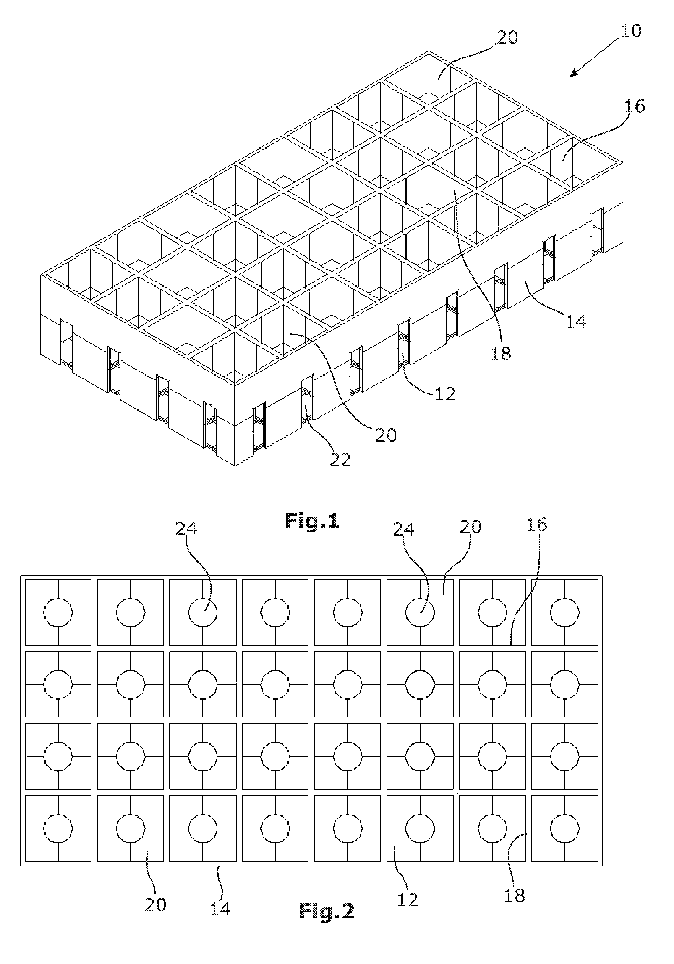

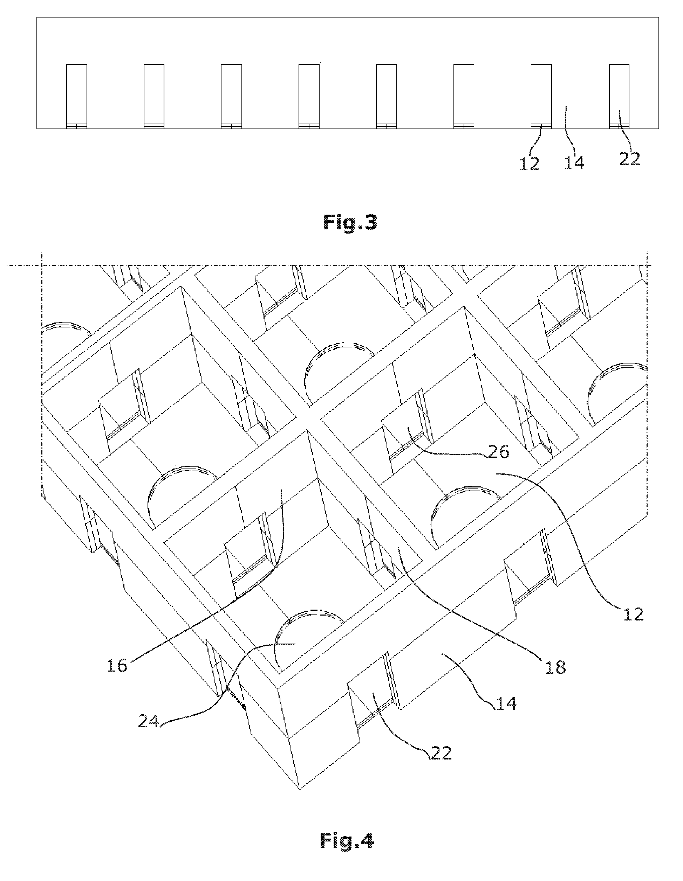

Fig. 1 zeigt eine perspektivische Darstellung eines ersten Gitterkörpers 10, der in diesem Ausführungsbeispiel als Spritzguss-Formkärper aus Kunststoff gefertigt ist, Der erste Gitterkörper 10 weist eine Bodenwand 12 auf, entlang dessen Kante ein aufragender, umlaufender Randsteg 14 verläuft. Der Randsteg 14 kann aber auch lediglich in Teilbereichen des Umfangs der Bodenwand 12 ausgebildet sein. Ferner weist der erste Gitterkörper 10 von der Bodenwand 12 aufragende, sich kreuzende Gitterstreben 16, 18 auf, die mit dem Randsteg 14 verbunden sind. Die geometrische Gesamtgestaltung des ersten Gitterkörpers ist quaderförmig, wobei die Bodenwand und der umlaufende Randsteg insgesamt eine rechteckige Struktur definieren. Die parallel zueinander verlaufenden längeren Seitenkanten können z. B. doppelt so lang wie die ebenfalls parallel verlaufenden kürzeren Seitenkanten sein. Andere Abmessungsverhältnisse sind möglich. Die Gitterstruktur aus den sich kreuzenden Gitterstreben 16 und 18 ist gleichmäßig. In diesem Ausführungsbeispiel definiert die Gitterstruktur in einem Raster angeordnete Kammern 20, deren Bodenwandabschnitte jeweils eine Öffnung 24 aufweisen. Der Randsteg 14 ist pro Kammer 20 mit einer Randstegaussparung 22 versehen. Ferner weisen die Gitterstreben 16, 18 Aussparungen bzw. Durchbruche 26 auf, wie dies insbesondere anhand von Fig. 4 zu erkennen ist.

Die Höhe der Gitterstreben 16, 18 kann im Wesentlichen gleich der Höhe des Randsteges 14.

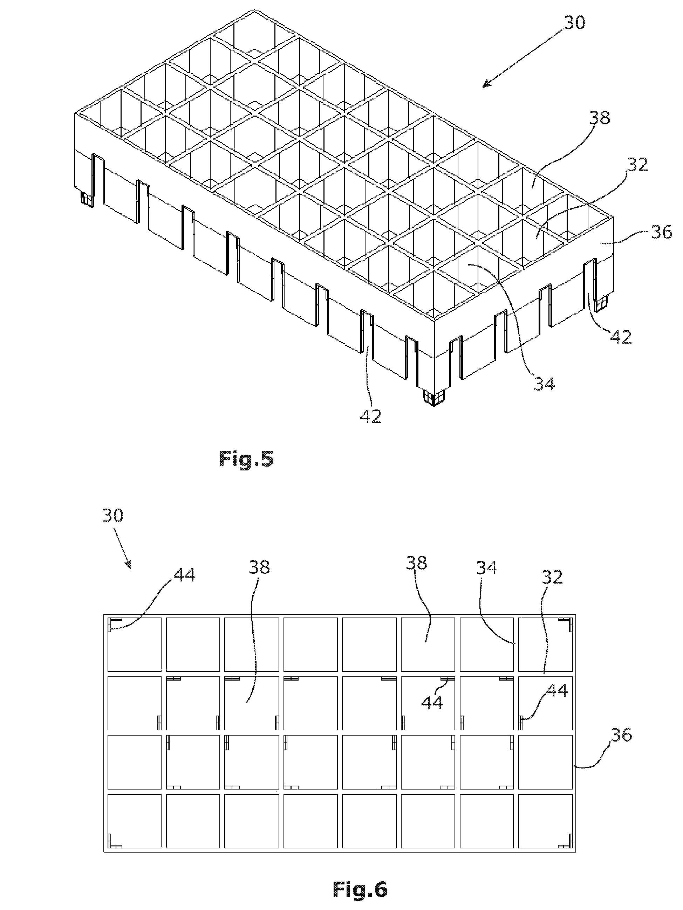

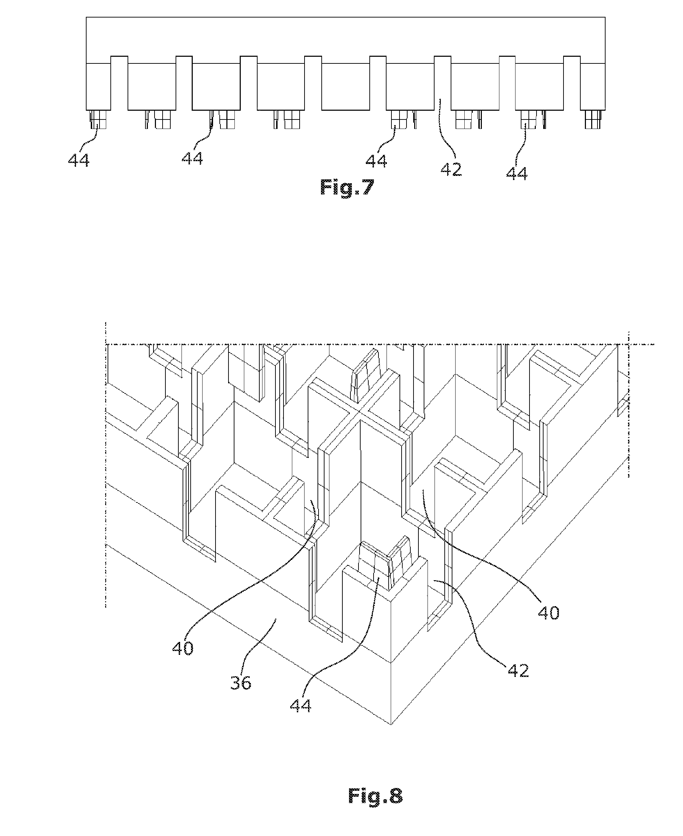

In den Fign. 5-8 sind verschiedene Ansichten eines zweiten Gitterkörpers 30 gezeigt. Auch der zweite Gitterkörper 30 weist eine Gitterstruktur aus sich kreuzenden Gitterstreben 32, 34 auf, die von einem hochstehenden, umlaufenden Randsteg 36 umgeben ist. Die Grundfläche des zweiten Gitterkörpers 30 ist, wie im Falle des ersten Gitterkörpers 10, rechteckig, wobei die längeren Seitenkanten doppelt so lang wie die kürzeren Seitenkanten sind. Die Gitterstruktur unterteilt den vom umlaufenden Randsteg 36 definierten Bereich in ein gleichmäßiges Raster von beidseitig offenen Kammern 38, die durch Aussparungen bzw, Durchbrechungen 40 untereinander verbunden sind (siehe Fig. 8). Ferner sind den einzelnen Kammern 38 Randstegaussparungen 42 zugeordnet. Die Höhe der Gitterstreben 32, 34 ist im Wesentlichen gleich der Höhe des Randsteges 36 (siehe vorher), was aber, wie auch im Falle des ersten Gitterkörpers 10 nicht notwendigerweise so sein muss.

Der Unterschied in der Ausgestaltung beider Gitterkörper besteht also zum einen darin, dass - anders als der erste Gitterkörper 10 - dem zweiten Gitterkörper 30 die Bodenwand fehlt, Darüber hinaus ist der zweite Gitterkörper 30 mit einer Vielzahl von im Wesentlichen regelmäßig angeordneten und über die Gitterstruktur verteilten Positioniervorsprüngen 44 versehen. Diese Positioniervorsprünge 44 sind an den Gitterstreben 32, 34 angeordnet und ragen über eine der beiden Hauptseitenflächen (im Ausführungsbeispiel beispielsweise die untere Hauptseitenfläche) des zweiten Gitterkörpers 30 hinaus. Sie dienen der Positionierung und Fixierung des zweiten Gitterkörpers 30 auf beispielsweise dem ersten Gitterkörper 10 bzw. einem anderen zweiten Gitterkörper 30.

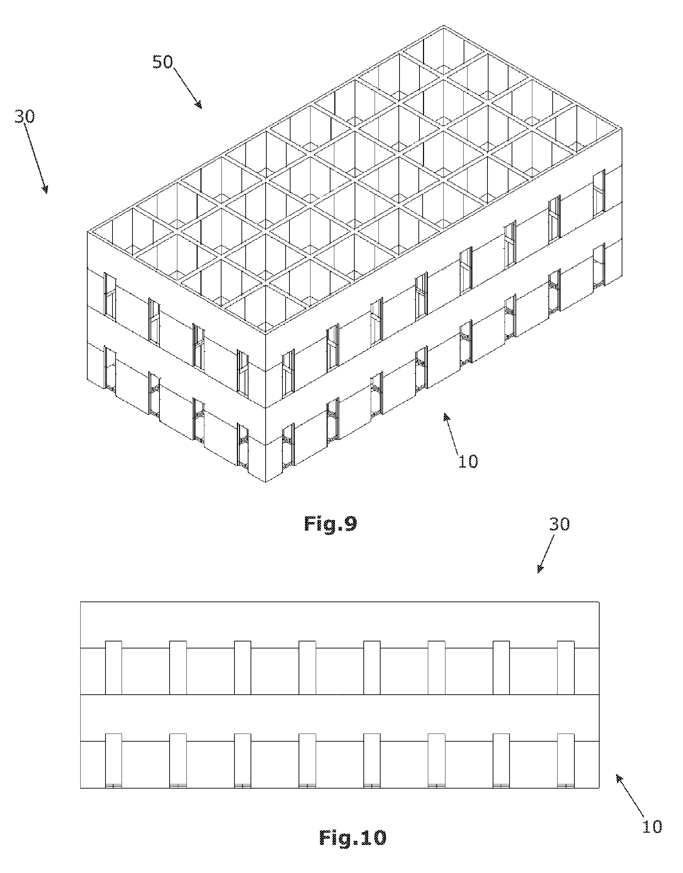

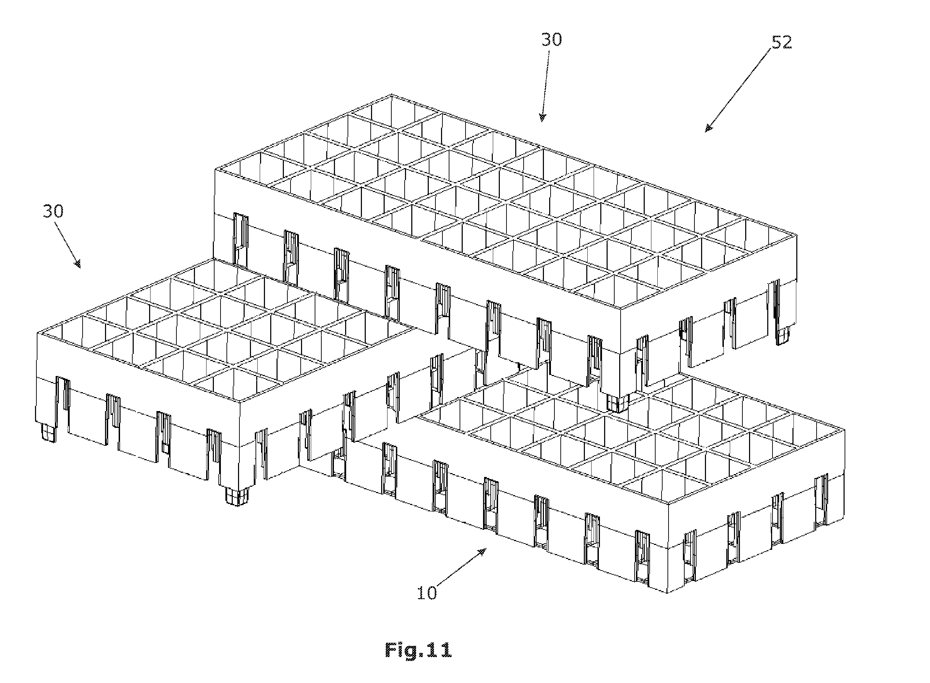

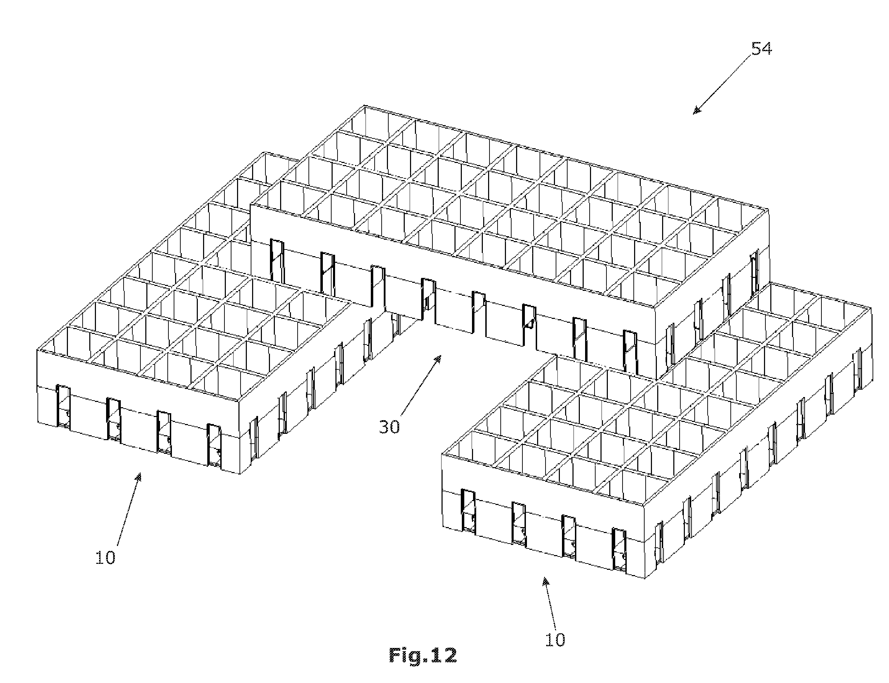

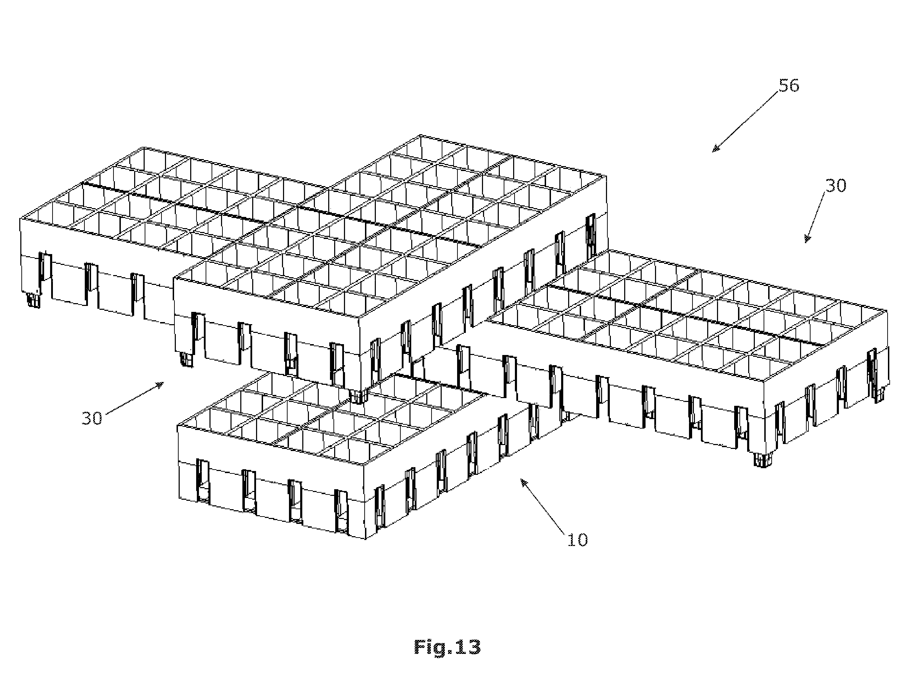

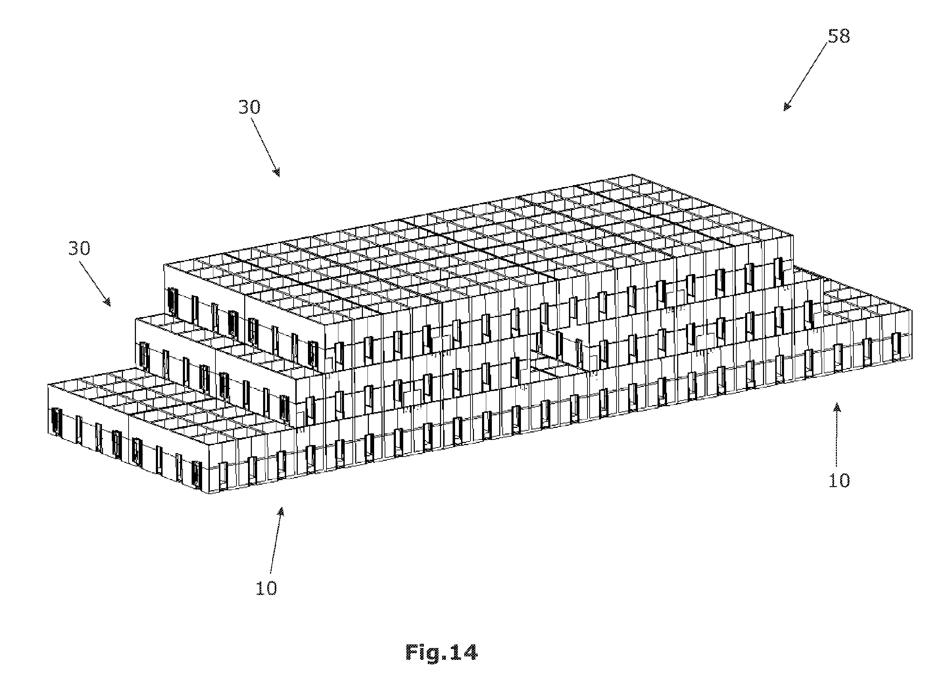

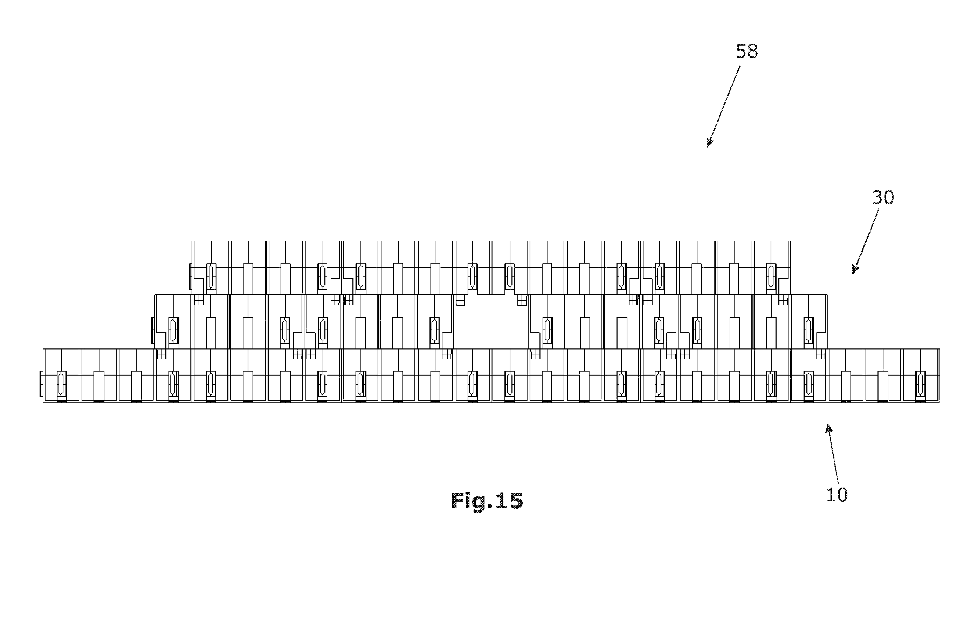

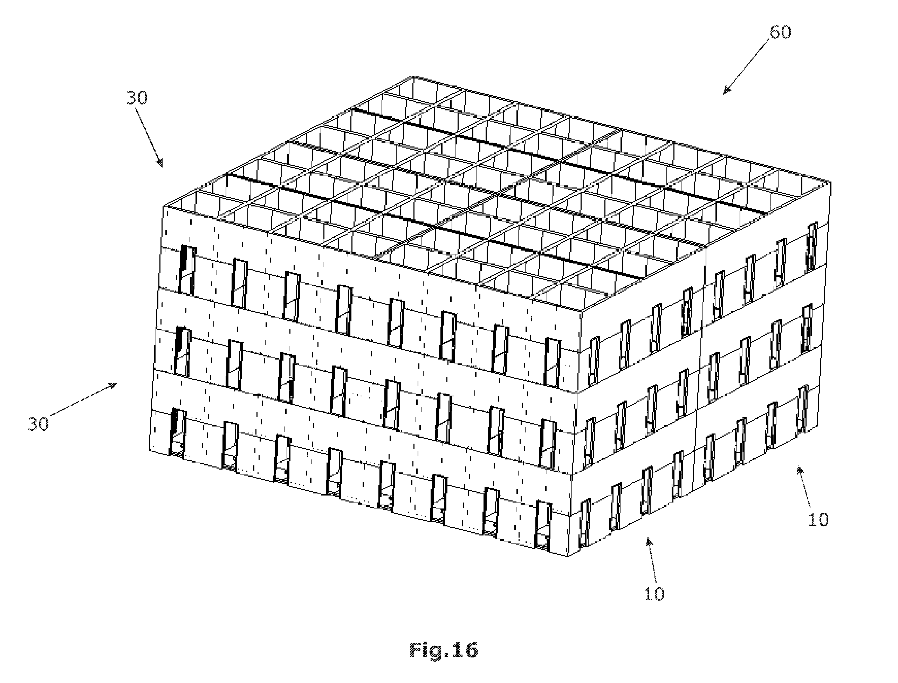

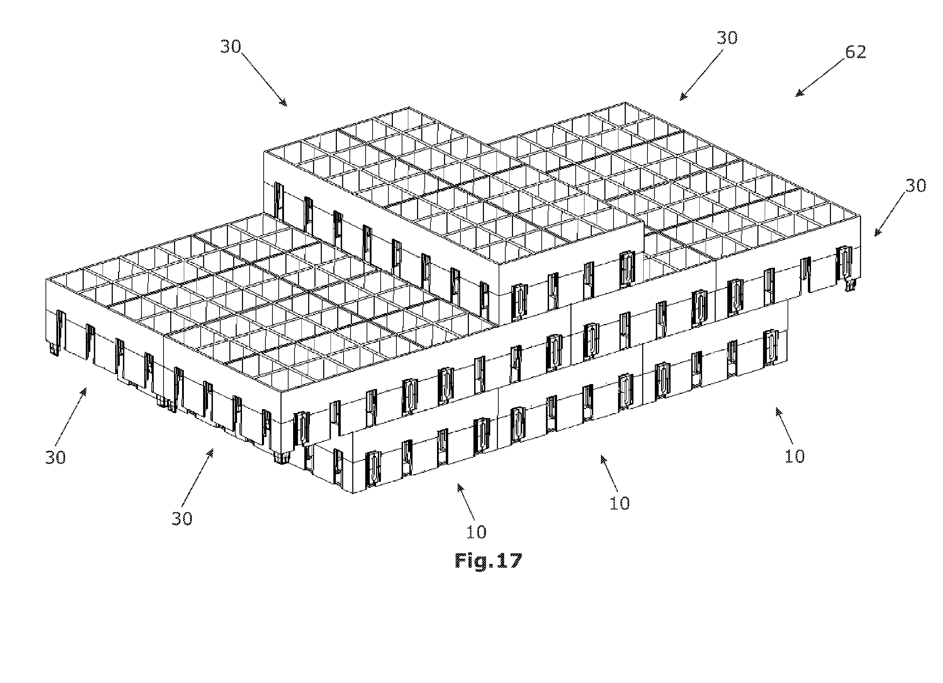

Ein Einbaukörper mit einem ersten und einem zweiten Gitterkörper 10 bzw. 30 ist beispielhaft in den Fign. 9 und 10 gezeigt. Diese Struktur kann beliebig nach oben hin erweitert werden. Auch eine Erweiterung zur Seite hin ist möglich. So zeigen beispielsweise die Fign. 11-17 weitere Einbaukörper (52-62), die durch unterschiedlich ausgerichtete und angeordnete erste und zweite Gitterkörper 10, 30 gebildet ist. Dabei bedient man sich einer sogenannten Verbundbauweise, wie sie beispielhaft in Fig. 11 gezeigt ist. Es ist aber auch möglich, die einzelnen Gitterkörper so, wie in Fig. 12 gezeigt, anzuordnen, so dass innerhalb des Einbaukörpers Hohlräume entstehen, durch die beispielsweise Leitungen hindurch geführt werden können (in der beispielhaften Anwendung des Einbaukörpers bei Einbringung ins Erdreich).

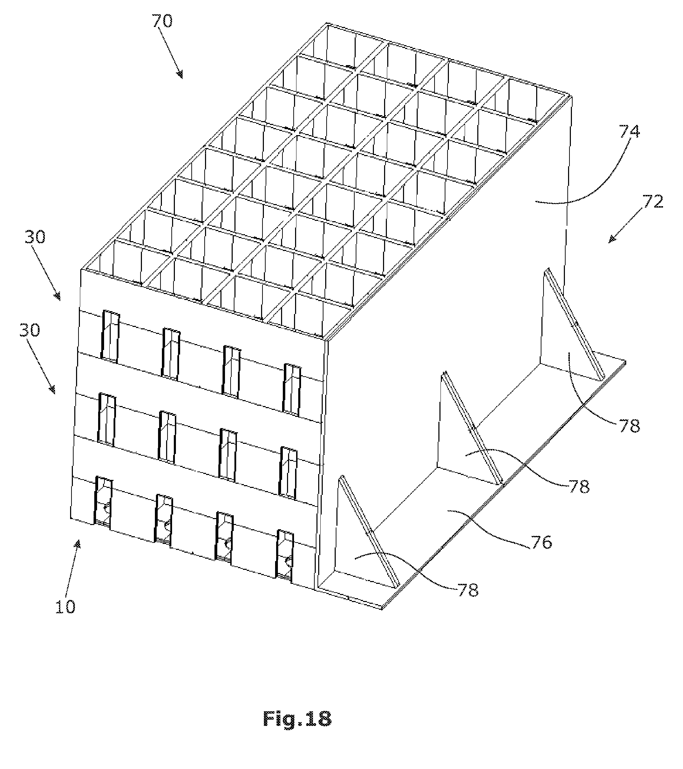

In Fig. 18 ist ein weiteres Ausführungsbeispiel eines Einbaukörpers 70 gezeigt, der aus einem ersten Gitterkörper 10 als unterstes Element und zwei darüber angeordneten zweiten Gitterkörpern 30 besteht. Ferner weist der Einbaukörper 70 ein L-förmiges Seitenwandelement 72 auf, mit dem in diesem Ausführungsbeispiel eine Außenseite des Einbaukörpers 70 abgedeckt wird. Das L-förmig Seitenwandelement 72 weist eine in diesem Ausführungsbeispiel vertikal angeordnete Wandplatte 74 und eine dazu rechtwinklig verlaufende schmale Wandplatte 76 auf. Zur Stabilisierung dieser L-Struktur dienen die Verstelfungselemente 78. Durch ein Wandelement, wie es in Fig. 18 gezeigt ist, kann der an sämtlichen Seiten offene Einbaukörper 70 an zumindest einer Seite sozusagen verschlossen werden. Je nach den Beschaffenheiten im Umfeld des Einbauortes kann dies erforderlich sein, um beispielsweise ins Erdreich gesickerte Flüssigkeit daran zu hindern, in Kontakt mit beispielsweise zu schützenden Bereichen zu gelangen.

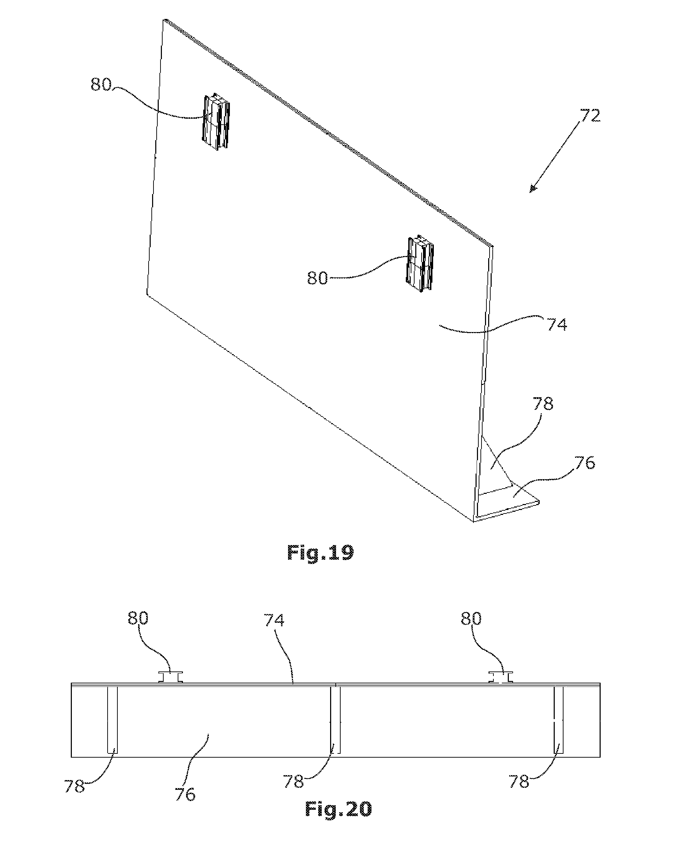

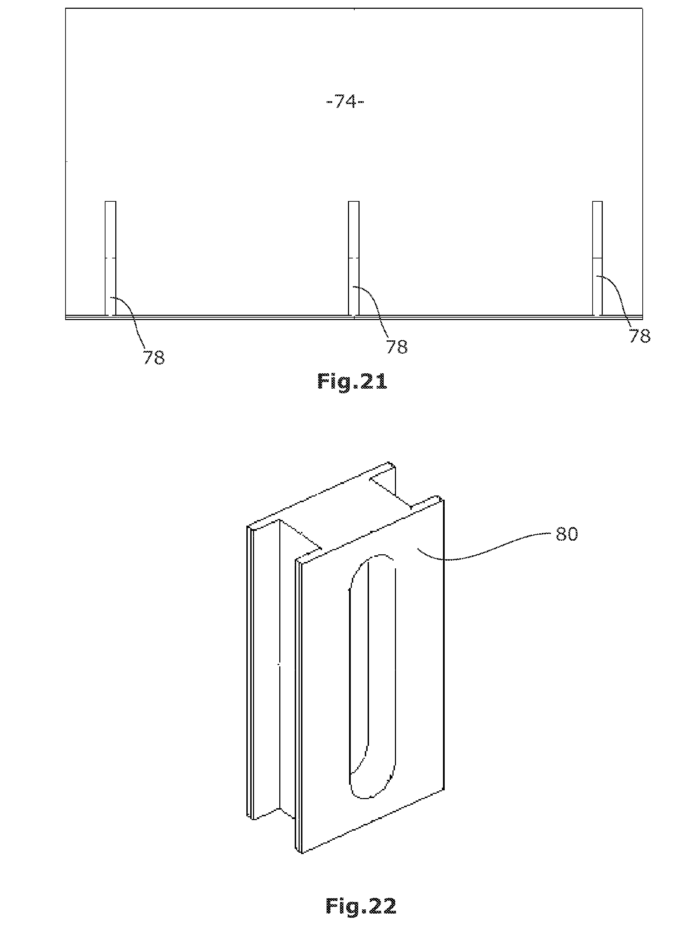

Die nähere Konstruktion des L-förmigen Seitenwandelements 72 ergibt sich aus den Fign. 19-21, wobei Fig. 19 eine rückwärtige Ansicht (perspektivisch) des Seitenwandelements 72 und Fig. 20 eine Draufsicht von oben auf das Seitenwandelement 72 zeigt. Fig. 21 zeigt eine Vorderansicht auf das Seitenwandelement 72. In Fig. 19 sind mechanische Verbindungselemente 80 an der Rückseite des L-förmigen Wandelements 72 gezeigt. Diese Verbindungselemente 80 wirken mit den Randstegaussparungen 42 des obersten zweiten Gitterkörpers 30 zusammen, Die Randstegaussparungen 42 sind zu einer Seite hin offen, so dass der zweite Gitterkörper 30 von oben auf die vorspringenden Verbindungselemente 80 des Wandelementes 72 geschoben werden können. Damit erfolgt eine mechanische Fixierung des Seitenwandelements 72 an dem Einbaukörper 70.

Diese Art der Fixierung kann auch verwendet werden, um Gitterkörper 10 bzw. 30, die nebeneinander liegend angeordnet sind und eine Lage eines mehrlagigen Einbaukörpers definieren, untereinander zu verbinden. Fig. 22 zeigt ein Verbindungselement 90, das die Funktion der Verbindung zweier benachbarter Gitterkörper hat. Verbindungselement 90 wird von unten in einige der sich paarweise gegenüber liegenden Randstegaussparungen 42 zweier benachbarter und seitlich nebeneinander angeordneter zweiter Gitterkörper 30 hineingeschoben.

## Patentansprüche

1. Einbaukörper mit
- mindestens einem ersten Gitterkörper (10), der eine Bodenwand (12) mit einem von dieser aufragenden, Randsteg (14) und mit ebenfalls von der Bodenwand (12) aufragenden, sich kreuzenden Gitterstreben (16,18), die sich jeweils zwischen gegenüberliegenden Abschnitten des Randsteges (14) erstrecken sowie mit diesem verbunden sind und benachbarte, einseitig offene Kammer (20) bilden, welche durch Aussparungen (26) in den Gitterstreben (16,18) untereinander verbunden sind, wobei in der Bodenwand (12) für jede Kammer (20) mindestens eine Öffnung (24) ausgebildet ist, und
- mindestens einem zweiten Gitterkörper (30), der einen hochstehenden, Randsteg (36) mit innerhalb des von diesem begrenzten Bereichs angeordneten, sich kreuzenden Gitterstreben (32,34) aufweist, welche benachbarte, beidseitig offene Kammern (38) bilden, die durch Aussparungen (40) in den Gitterstreben (32,34) untereinander verbunden sind,
- wobei von dem Randsteg (36) und/oder den Gitterstreben (32,34) des zweiten Gitterkörpers (30) zu einer Seite desselben Positioniervorsprünge (44) abstehen, die bei Anordnung eines zweiten Gitterkörpers (30) auf einem ersten Gitterkörper (10) und/oder bei Anordnung zweier zweiter Gitterkörper (30) aufeinander in die Kammern (20) des ersten Gitterkörpers (10) bzw. in die Kammern (38) des anderen zweiten Gitterkörpers (30) eintauchen.

2. Einbaukörper nach Anspruch 1, **gekennzeichnet durch**
- eine unterste Lage aus nebeneinander liegenden ersten Gitterkörpern (10) und
- mindestens eine zweite Lage aus nebeneinander angeordneten zweiten Gitterkörpern (30), die auf den ersten Gitterkörpern (10) bzw.
auf den zweiten Gitterkörpern (30) einer unteren Lage angeordnet sind,
- wobei die ersten und zweiten Gitterkörper (10;30) im Verbund angeordnet sind und ein zweiter Gitterkörper (30) sich über mehrere erste Gitterkörper (10) erstreckt oder versetzt gegenüber zwei nebeneinander liegenden ersten Gitterkörpern (10) angeordnet ist und sich zumindest teilweise über diese hinweg erstreckt bzw. ein zweiter Gitterkörper (30) einer oberen zweiten Lage sich über mehrere zweite Gitterkörper einer unteren zweiten Lage erstreckt oder gegenüber zwei nebeneinander liegenden zweiten Gitterkörpern (30) einer unteren zweiten Lage versetzt angeordnet ist und sich zumindest teilweise über diese hinweg erstreckt.

3. Einbaukörper nach Anspruch 1 oder 2, **gekennzeichnet durch** mindestens ein L-förmiges Seitenwandelement (72) zur Anlage und/oder Verbindung mit Randstegen (14;36) übereinander angeordneter erster und zweiter Gitterkörper (10;30) bzw. übereinander angeordneter zweiter Gitterkörper (30).

4. Einbaukörper nach einem der Anspruche 1 bis 3, **dadurch gekennzeichnet, dass** die Randstege (14;36) der ersten und zweiten Gitterkörper (10;30) deren jeweiligen Kammern (20;38) zugeordnete Aussparungen (12;42) aufweisen.

5. Einbaukörper nach Anspruch 4, **dadurch gekennzeichnet, dass** zwei nebeneinander angeordnete erste oder zweite Gitterkörper (10;30) durch Verbindungselemente (90) miteinander mechanisch verbunden sind, die in zwei miteinander fluchtende Randstegaussparungen (14;36) der Gitterkörper (10;30) einsetzbar sind.
